# EUROPEAN PATENT SPECIFICATION

(11) **EP 4 108 303 B1**
(45) Date of publication and mention of the grant of the patent: **30.07.2025**
(21) Application number: 21842108.9
(22) Date of filing: 08.02.2021
(51) Int. Cl.: G05D 1/249, G05D 1/648, A01D 51/00, A63B 24/00, A63B 71/06, A63B 47/02

(54) **SCATTERED-OBJECT COLLECTION SYSTEM**
SAMMELSYSTEM FÜR VERSTREUTE OBJEKTE
SYSTÈME DE COLLECTE D'OBJETS ÉPARPILLÉS

(30) Priority: 13.07.2020 JP 2020120081
(43) Date of publication of application: 28.12.2022
(73) Proprietor: Yamabiko Corporation, Ohme-shi, Tokyo 198-8760 (JP)
(72) Inventor: ISHIHIRA Daisuke, Ohme-shi, Tokyo 198-8760 (JP); NAKANO Kenji, Ohme-shi, Tokyo 198-8760 (JP)
(74) Representative: Dietz, Christopher Friedrich
(86) International application number: PCT/JP2021/004619
(87) International publication number: WO 2022/014075

(56) References cited:
- EP-A1- 3 553 618
- JP-A- 2008 220 935
- JP-A- 2008 220 935
- JP-A- 2020 087 134
- KR-B1- 101 430 103
- US-A1- 2012 303 207
- NINO PEREIRA ET AL: "Autonomous golf ball picking robot design and development", INDUSTRIAL ROBOT: AN INTERNATIONAL JOURNAL, vol. 39, no. 6, 12 October 2012 (2012-10-12), Bradford, pages 541 - 550, XP055603952, ISSN: 0143-991X, DOI: 10.1108/01439911211268660
- ANONYMOUS: "Introducing the new "Ruro" "MC-RS800" that creates maps and cleans wisely-cleaning time is halved", ITMEDIA NEWS, ITMEDIA, JP, pages 1 - 3, XP009534437, Retrieved from the Internet <URL:https://www.itmedia.co.jp/lifestyle/articles/1708/24/news134.html> [retrieved on 20210419]

## Description

### Technical Field

The present invention relates to a scattered object collection system including an autonomous collector for picking up and collecting objects that have fallen and scattered on the ground (i.e., scattered objects), such as golf balls, tennis balls, nuts, and containers, for example, while traveling on the ground. Particularly, the present invention relates to a scattered object collection system configured to efficiently collect scattered objects using positional information.

### Background Art

For example, there is known an autonomous (also referred to as "self-propelled") ball collector, also called a ball picker and the like, that collects a number of golf balls scattered on the ground of a golf driving range, for example, while traveling on the ground as described in Patent Literature JP 2963571 B and WO 00/78410 A.

Such a ball collector typically includes, as described in Patent Literature JP 2963571 B and WO 00/78410 A, a ball collection wheel that picks up balls from the ground by rolling on the ground, and a collection tank that receives and stores the balls picked up by the ball collection wheel.

As the ball collector, a motor-driven ball collector, a traction type ball collector, and a hand push ball collector are widely used. As the ball collection wheel, the one described in Patent Literature JP S50-53061 U is known that includes a predetermined number of discs forming multiple elongated grooves including a number of annular grooves, each annular groove having a number of ball pockets formed therein at equal angular intervals along the circumferential direction for picking up balls on the ground.

Further, NINO PEREIRA ET AL: "Autonomous golf ball picking robot design and development", INDUSTRIAL ROBOT: AN INTERNATIONAL JOURNAL, vol. 39, no. 6, 12 October 2012, pages 541-550, discloses a scattered object collection system with the features of the preamble of claim 1. Various methods for operating such object collection systems are also known from JP 2008 220935 A, EP 3 553 618 A1, KR 101 430 103 B1 and US 2012/303207 A1.

### Summary of Invention

### Technical Problem

The conventional scattered object collection system using the above-described autonomous ball collector performs a ball collecting operation while traveling all over a work area (i.e., an area where a ball may be on the ground) irrespective of whether there is actually a ball, and thus has a low efficiency in the ball collecting operation due to a number of unnecessary traveling of the ball collector.

With a low efficiency in the ball collecting operation, balls may not often be supplied (i.e., collected) promptly to meet customer demands for balls in a hitting bay, and to avoid this, the number of balls in stock needs to be increased, for example. This is not cost efficient and may increase the number of times of charging due to a high battery consumption (power consumption) relative to the number of collected balls, whereby the energy cost may increase and the operation efficiency may be even lower.

Thus, nowadays, to efficiently perform the ball collecting operation, grasping the correct scattering (i.e., distribution) state of balls, the correct dense areas of balls, and the like is considered. For example, as described in Patent Literature JP 2008-220935 A, there is known a technique of collecting ball density distribution information before starting a ball collecting operation, and performing a ball collecting operation starting with an area with a high ball distribution rate (i.e., density) while detecting the position of the ball collector in a work area using a global positioning system (GPS).

However, with the technique described in Patent Literature JP 2008-220935 A, the ball density distribution information is created by observing a pattern (i.e., a distribution state) of balls in the work area for a given period of time using a visual sensor, such as a camera, for monitoring the condition of the work area and another sensor for monitoring the number of balls collected in a designated range, for example. Thus, it would be impossible to acquire the correct actual position where each ball was picked up (i.e., the actual positional information on each ball) that is necessary for creating the ball density distribution information. In addition, although the position of the ball collector in the work area can be detected using a GPS and the like, a specific means of grasping the actual positional information on each ball using a GPS and the like is unknown.

In addition, in relation to identifying a position of a ball, Patent Literature US 8,972,102 B describes a vehicle type ball collector configured to use an ID tag embedded in a ball and identify a position of a ball using the ID tag embedded ball and a GPS, and then collect balls. However, a ball collection system using the ID tag embedded balls tends to be extremely expensive and is not for a practical use because it is not cost effective.

The present invention has been made in view of the foregoing, and provides a highly reliable, cost-effective scattered object collection system that can efficiently collect scattered objects by reducing unnecessary traveling of the autonomous collector using positional information.

### Solution to Problem

In view of the foregoing, a scattered object collection system according to the present invention basically includes an autonomous collector that performs a collecting operation by picking up scattered objects scattered in a work area while traveling in the work area and a collector management unit that manages the autonomous collector, in which the collector management unit acquires positional information on the autonomous collector, a sensor for sequentially detecting that each scattered object has been picked up and collected and for acquiring collection information. The collector management unit is further configured to send the acquired positional information to an information acquisition unit and identifies an actual position where each scattered object was picked up in the work area using the acquired positional information, wherein an object position identification unit is configured to correct the positional information on the collector at a time point when the objects are detected by the sensor, using information acquired by the information acquisition unit, thereby acquiring the actual position where each object were picked up; and allows the autonomous collector to perform a collecting operation in an area having a high density of scattered objects with higher priority than in an area having a low density of scattered objects using the identified actual positional information on each scattered object.

The autonomous collector includes the sensor for sequentially detecting that each scattered object has been picked up and collected and acquiring collection information, and the collector management unit uses the acquired collection information in identifying an actual position where each scattered object was picked up.

In still another aspect, the collector management unit may acquire a distribution state of scattered objects in the work area using the actual positional information on each scattered object, and create a scattered object density distribution map including a plurality of dense areas having different densities of scattered objects based on the acquired distribution state.

### Advantageous Effects of Invention

Since the scattered object collection system according to the present invention can determine the correct position of each scattered object on the ground, such as a ball, by using positional information and allows the autonomous collector to perform a collecting operation in a place having a high density of scattered objects with higher priority than a place having a low density of scattered objects, and thus can efficiently collect scattered objects by reducing unnecessary traveling of the autonomous collector. Therefore, it is possible to provide a highly reliable, cost-effective scattered object collection system.

### Brief Description of Drawings

Fig. 1 is a cross-sectional view of an example of a ball collector as an autonomous collector that is used in one embodiment of a scattered object collection system according to the present invention, with a body cover of the ball collector omitted.
Fig. 2 is a partially enlarged perspective view of a ball collection wheel in Fig. 1.
Fig. 3 is an enlarged cross-sectional view of the ball collection wheel in Fig. 1.
Fig. 4 is a functional block diagram used for illustrating a process of a controller and a management server provided in the ball collector of an embodiment.
Fig. 5 is a view used for illustrating a distribution state of balls in a work area of an embodiment.
Fig. 6 is a view illustrating a ball density distribution map created based on the distribution state of balls in Fig. 5 of an embodiment.
Fig. 7 is a diagram used for illustrating a ball density distribution map when created by computer processing of an embodiment.
Fig. 8 is a view used for illustrating a travel ratio in each area of an embodiment.
Fig. 9 is a flowchart used for illustrating the travel ratio in each area of an embodiment.
Fig. 10 is a schematic view illustrating a state where an autonomous ball collector is performing a collecting operation while pattern traveling.
Fig. 11 is a schematic view illustrating a state where an autonomous ball collector is performing a collecting operation while random traveling.

### Description of Embodiments

Hereinafter, one embodiment of the present invention will be described with reference to the drawings.

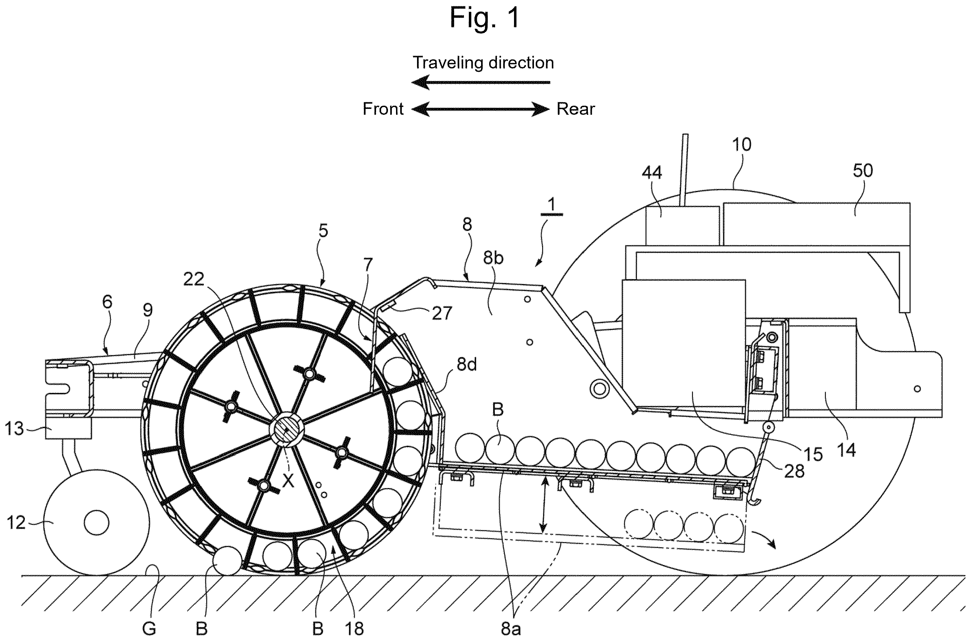

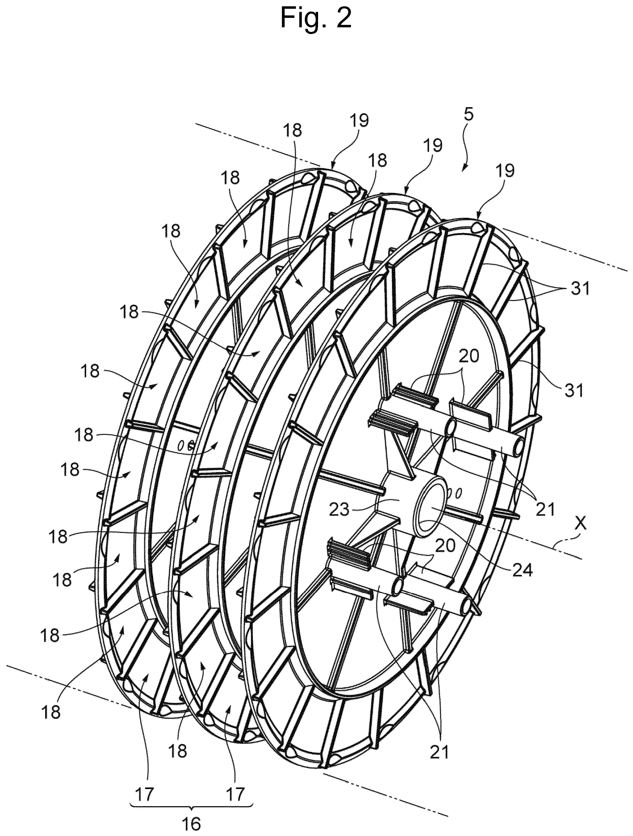

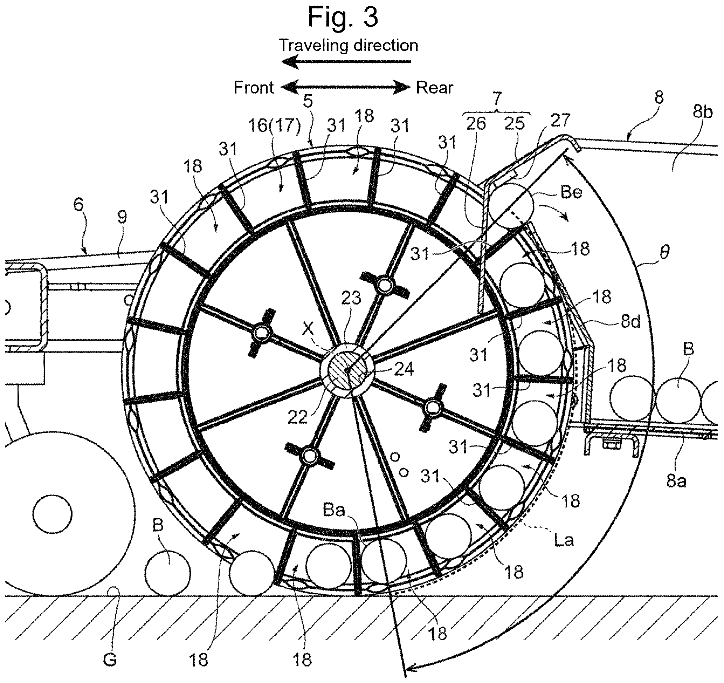

Fig. 1 is a schematic configuration diagram of an example of a ball collector as an autonomous collector that is used in one embodiment of a scattered object collection system according to the present invention. Fig. 2 is a partially enlarged perspective view of a ball collection wheel in Fig. 1. Fig. 3 is an enlarged cross-sectional view of the ball collection wheel in Fig. 1.

A ball collector 1 illustrated in Fig. 1 is an unmanned autonomous ball collector and is adapted to collect balls on the ground where a number of balls are scattered while traveling on the ground. The ball collector 1 is typically used for collecting a number of golf balls scattered on the ground of a golf driving range.

The ball collector 1 includes a traveling body 6 as a body movable on the ground, a ball collection wheel 5, a ball releasing member (also referred to as a squeezer) 7, a collection tank 8, and a body cover (not illustrated) that covers them.

The traveling body 6 includes a frame 9, a pair of right and left drive wheels 10 disposed on the rear of the frame 9, drive motors 15 that drive the drive wheels 10, a battery 14 as a power supply for the drive motors 15 and the like, a pair of right and left steering wheels 12 disposed on the front of the frame 9, and a steering adjustment unit 13 that controls the steering wheels 12, for example. As the drive wheels 10 are rotationally driven by the drive motors 15, the traveling body 6 moves and is automatically controlled in accordance with a predetermined program, whereby the traveling direction or the like of the traveling body 6 is automatically changed so that the traveling body 6 can travel across the entire area necessary for collecting balls.

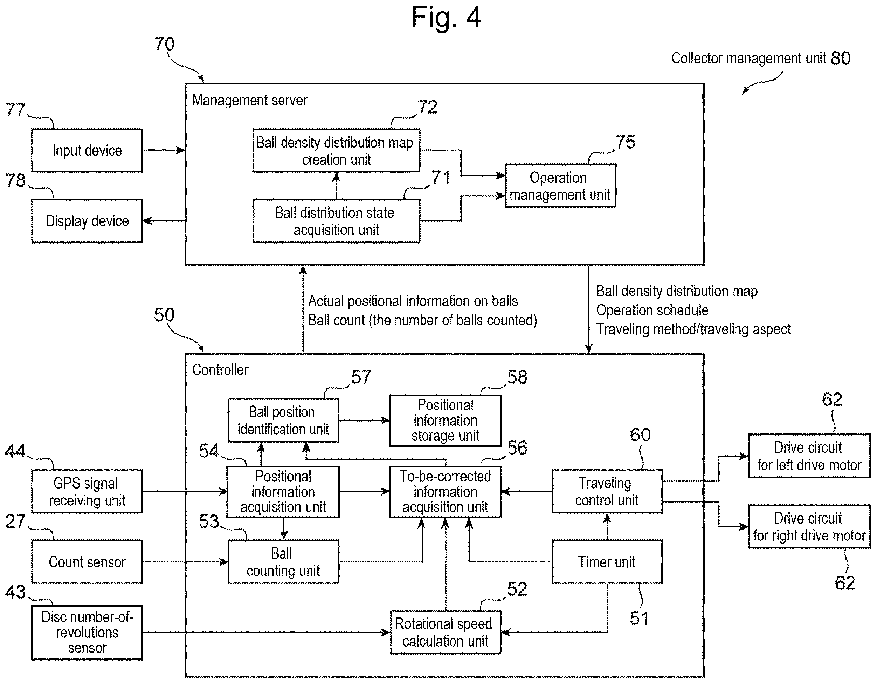

A signal receiving unit 44 having an antenna for receiving a signal from a satellite positioning system, such as a GPS, to acquire positional information is provided above the drive motors 15, the battery 14, and the like and below the body cover (not illustrated). A controller 50 (described in detail later) that performs traveling control and the like is provided adjacent to the signal receiving unit 44. The controller 50 is functionally provided with, for example, a positional information acquisition unit 54 (Fig. 4) that acquires positional information (i.e., latitude and longitude information) on the ball collector 1 based on a signal received by the signal receiving unit 44.

The ball collection wheel 5 is disposed between the pair of steering wheels 12 and the pair of drive wheels 10 in the front-rear direction of the ball collector 1. The ball collection wheel 5 is rotatable about the axis X extending in the right-left direction of the traveling body 6, and is supported by the frame 9 such that the outer peripheral face of the ball collection wheel 5 is always in contact with the ground G under its own weight. The ball collection wheel 5 collects a number of balls B scattered on the ground G while rolling on the ground G as the traveling body 6 moves forward.

As illustrated in Fig. 2, the ball collection wheel 5 has on its outer circumference multiple elongated grooves 16 in annular shapes (including a number of annular grooves 17). The annular grooves 17 forming the multiple elongated grooves 16 have ball pockets 18, continuously formed therein in the circumferential direction, for allowing entry and exit of balls B due to their elasticity. Each ball pocket 18 has a size capable of holding only one ball B as illustrated in Fig. 1. In addition, the ball pockets 18 of the adjacent annular grooves 17 are formed such that they are displaced from each other by a predetermined angle in the circumferential direction of the annular grooves 17.

The ball collection wheel 5 is formed by an aggregate of a number of discs 19 with an identical configuration, and the annular grooves 17 are formed at equal intervals between the adjacent discs 19. Each disc 19 has on one face a plurality of attachment shaft portions 21 each having a spacer 20, and has on the other face shaft portion receiving holes (not illustrated) for receiving the attachment shaft portions 21. The attachment shaft portions 21 and the shaft portion receiving holes of the adjacent discs 19 are coupled together so that a number of discs 19 are integrated at equal intervals. The annular grooves 17 are formed by the spacers 20 between the adjacent discs 19. Each disc 19 has formed at its center a boss portion 23 for receiving a support shaft 22 (see Fig. 1), and an aggregate of the boss portions 23 form a support-shaft insertion hole 24 in the ball collection wheel 5. The support shaft 22 (see Fig. 1) that is inserted through the support-shaft insertion hole 24 is rotatably supported by the frame 9.

As can be seen in Fig. 3, the ball releasing member 7 is a pectinate member as a whole, and includes a proximal portion 25 extending in the right-left direction of the traveling body 6, and a number of ball releasing protrusions 26 extending from the proximal portion 25 in parallel with each other at equal intervals. The gap between the ball releasing protrusions 26 is identical to the gap between the discs 19 (that is, the annular grooves 17) of the ball collection wheel 5. The proximal portion 25 of the ball releasing member 7 is fixed to the frame 9 around a position above the ball collection wheel 5, and each ball releasing protrusion 26 protrudes into each annular groove 17 of the ball collection wheel 5. That is, the pectinate ball releasing member 7 is disposed such that it protrudes into each of the annular grooves 17 forming the multiple elongated grooves 16.

The lower face of the proximal portion 25 of the ball releasing member 7 has a contact-type count sensor 27, which counts the number of balls B released from the ball pockets 18 by the ball releasing protrusions 26, fixed thereto by a method such as bonding. The count sensor 27 is composed of a single elongated plate-like pressure sensor using a piezoelectric element, and extends in the right-left direction along the proximal portion 25 of the ball releasing member 7 so as to straddle each of (all) the annular grooves 17 and it has a length corresponding to the length of the ball collection wheel 5 in the axial direction. The count sensor 27 is disposed on the trajectories of balls B that are guided in the radiation direction of the ball collection wheel 5 (or the discs 19 thereof) by the ball releasing protrusions 26 of the ball releasing member 7, and elongated partitioning protrusions 31 which are formed in the radiation direction on both side of each disc 19 and partition each annular groove 17 at equal angular intervals in the circumferential direction so as to define the ball pockets 18. Therefore, the balls B released from the ball collection wheel 5 by the ball releasing member 7 surely touch the count sensor 27. Accordingly, the balls B are accurately counted by the count sensor 27. The count sensor 27 may be a non-contact-type counter sensor.

Although the count sensor 27 in the present embodiment is composed of a single pressure sensor disposed straddle each of (all) the annular grooves 17, the count sensor 27 may include individual (a plurality of) pressure sensors disposed corresponding to the respective annular grooves 17. In addition, the count sensor 27 may be disposed at a portion other than the ball releasing member 7.

The collection tank 8, which includes a bottom plate 8a, side plates 8b, and a front plate 8d, for example, is disposed behind the ball releasing member 7. The side plates 8b of the collection tank 8 are supported by the frame 9 of the traveling body 6, and accommodate balls B that are released from the ball collection wheel 5 by the ball releasing member 7. The bottom plate 8a of the collection tank 8 is attached in a manner translatable in the vertical direction. When the bottom plate 8a is moved to a ball discharge position at a lower level, a gap is produced between the bottom plate 8a of the collection tank 8 and a back plate 28 so that balls B are discharged through the gap. In addition, a full tank detector (not illustrated) for detecting that the collection tank 8 is full of a plurality of collected balls B is provided (swingably) on the collection tank 8.

With such a configuration, as illustrated in Fig. 3, when the traveling body 6 moves forward, the ball collection wheel 5, which is rotatable and is always in contact with the ground G, rotates in a counterclockwise direction as seen in Fig. 3. Accordingly, a number of balls B scattered on the ground G enter the ball pockets 18 and are held therein due to the elastic deformation property of the ball pockets 18 (that is, the balls B on the ground are picked up). The balls B held in the ball pockets 18 are transferred upward with the rotation of the ball collection wheel 5 along with the forward movement of the traveling body 6, and are then pushed against the ball releasing protrusions 26 of the ball releasing member 7. Then, with a further rotation of the ball collection wheel 5, the balls B in the ball pockets 18 are guided upward along the elongated partitioning protrusions 31 at the rear portion of the ball collection wheel 5 in the rotation direction. Then, after touching the count sensor 27 attached to the lower face of the proximal portion 25 of the ball releasing member 7, the balls B are sent to the collection tank 8 and fall therein.

It should be noted that the ball collector 1 is provided with a mechanism (not illustrated) for supporting the ball collection wheel 5 while elevating it from the ground. When the aforementioned ball collecting operation is not performed, such as when the collection tank 8 has become full and returns to a predetermined storage space 66 or during a change in the direction, such as a U-turn, for example, the ball collection wheel 5 is elevated from the ground.

In addition to the aforementioned configuration, in the scattered object collection system of the present embodiment, as illustrated in Fig. 4, the controller 50 is provided in the ball collector 1 and a management server 70 including a PC, for example, is provided outside of the ball collector 1. The controller 50, the management server 70, and the like form a collector management unit 80 for managing a ball collecting operation by the ball collector 1.

The controller 50 includes a CPU, an input/output circuit, and a storage unit (e.g., ROM, RAM, nonvolatile memory, HDD, and SSD). The storage unit stores programs and various data. By executing a predetermined program stored in the storage unit, the controller 50 functions as a desired functional processor for controlling autonomous travel or acquiring positional information, for example.

The ball collector 1 (i.e., the controller 50) and the management server 70 are provided with a transmission/reception unit (not illustrated) for connecting them to each other via a wireless network (e.g., a wireless LAN).

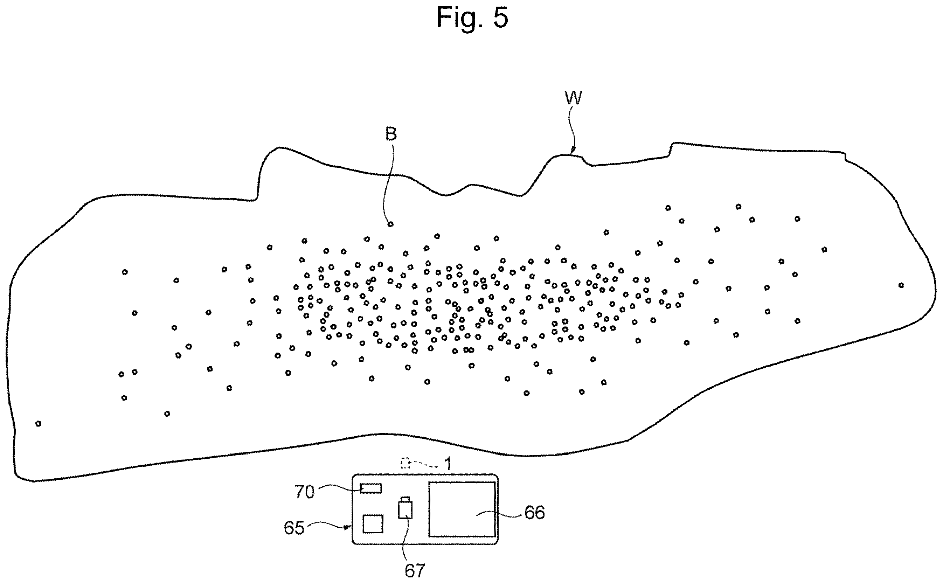

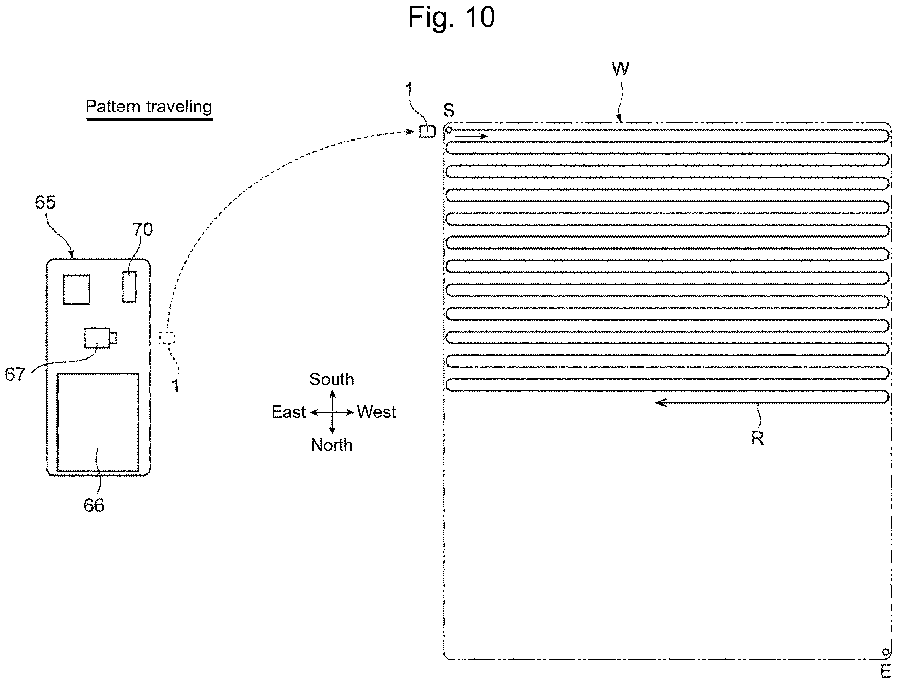

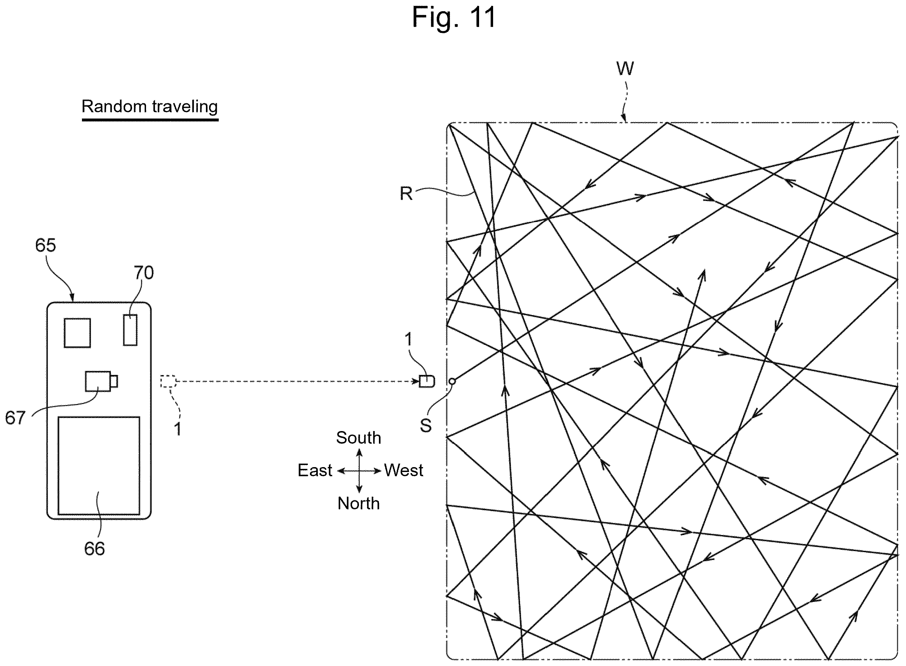

In the scattered object collection system of the present embodiment, the ball collector 1 is configured to pick up balls on the ground with the ball collection wheel 5 and collect them into the collection tank 8 while performing pattern traveling (Fig. 10) or random traveling (Fig. 11) from a start point S to an end point E as appropriate along a traveling path R within the work area W (Fig. 5) where balls are expected to be scattered that is set beforehand.

Herein, it is a primary object of the present embodiment to improve the efficiency in the ball collecting operation, and the following schematic configuration is employed to achieve the primary object. That is, the scattered object collection system identifies an actual position where each ball was picked up in the work area W using a signal received by the signal receiving unit 44 and a detection signal obtained by the count sensor 27, acquires a distribution state of balls in the work area W using the identified actual positional information on each ball, creates a ball density distribution map including a plurality of dense areas having different ball densities based on the acquired distribution state of balls, and allows the ball collector 1 to travel to perform a collecting operation in a place having a high density of balls with higher priority than a place having a low density of balls, more specifically, such that the place having a high density of balls has a higher travel ratio (e.g., travel time or travel distance) of the ball collector 1 than that of the place having a low density of balls, using the created ball density distribution map.

It should be noted that, in addition to the primary object, to increase the control accuracy, the scattered object collection system of the present embodiment is configured to correct the positional information on the ball collector 1 at a time point when a ball was counted by touching the count sensor 27, and thus acquire the actual position where the ball was picked up (i.e., the actual positional information on the ball).

This will be briefly described with reference to Fig. 3. A position (i.e., a ball Be) at a time point when a ball has touched the count sensor 27 and a signal (i.e., level) from the count sensor 27 has thus exceeded a predetermined threshold, that is, a time point when a ball is recognized as having been picked up based on a signal from a satellite positioning system, such as a GPS, to acquire positional information is away from the actual position (i.e., a ball Ba) where the ball was picked up. That is, by the time a ball touches the count sensor 27 after having been picked up from the ground by the ball collection wheel 5, the ball collector 1 has moved by the length La of the outer circumferential arc of the ball collection wheel 5 corresponding to the central angle □ formed by the ball Ba - the support shaft 22 - the ball Be. It follows that the positional information includes an error corresponding to the movement distance La of the ball collector 1 in its traveling direction. Thus, the positional information is to be corrected (described in detail later).

The scattered object collection system of the present embodiment having such a schematic configuration will be described in detail below.

In the present embodiment, the scattered object collection system includes the collector management unit 80 including the controller 50, the management server 70, and the like to manage the ball collector 1. The controller 50, as illustrated in a functional block of Fig. 4, is functionally provided with a timer unit 51, a rotational speed calculation unit 52, a ball counting unit 53, a positional information acquisition unit 54, a to-be-corrected information acquisition unit 56, a ball position identification unit 57, a positional information storage unit 58, and a traveling control unit 60.

The timer unit 51 starts timing when the controller 50 is powered ON (i.e., started), continuously measures the elapsed time while the controller 50 is ON, and terminates the timing when the controller 50 is powered OFF. The measurement unit of the timer unit 51 is 10 µs, for example. The elapsed time from when the controller 50 is started, corresponding to the "time," can be obtained from the timer unit 51 in units of one hundred-thousandth of a second.

The rotational speed calculation unit 52 calculates the rotational speed of the ball collection wheel 5 (or its equivalent traveling speed of the ball collector 1) based on a signal from a disc number-of-revolutions sensor 43 that detects the rotational speed of the discs 19, and sends the calculated rotational speed (or the traveling speed) to the to-be-corrected information acquisition unit 56.

The ball counting unit 53 determines if a signal from the count sensor (i.e., the pressure sensor) 27 has exceeded a predetermined threshold, and if so, determines that balls have been collected and thus counts the number of the collected balls, and then sends to the to-be-corrected information acquisition unit 56 information that the balls have been counted as well as the time point when the signal has exceeded the threshold. Furthermore, when a ball count (e.g., the number of balls counted) has reached a given number (i.e., when the collection tank is estimated to have become full) during the ball collecting operation, the ball counting unit 53 sends to the traveling control unit 60 information indicating so. It should be noted that the ball counting unit 53 sends also to the management server 70 the ball count (e.g., the number of balls counted) and information that the collection tank is full of collected balls, for example.

The positional information acquisition unit 54 acquires the positional information on the ball collector 1 at predetermined time intervals (e.g., every one-hundredth of a second) based on a signal received by the signal receiving unit 44, and sends the acquired positional information to the to-be-corrected information acquisition unit 56.

The to-be-corrected information acquisition unit 56 acquires information for correcting the positional information on the ball collector 1 at a time point when balls were counted by touching the count sensor 27, in order to determine the actual position where the balls were picked up. As the information for correcting the positional information on the ball collector 1, the following are used, for example: the movement distance La of the ball collector 1 from the time each ball was picked up from the ground by the ball collection wheel 5 till the ball was counted by touching the count sensor 27; the length of time Ja taken for each ball to be counted by touching the count sensor 27 after having been picked up from the ground by the ball collection wheel 5; positional information acquired from the positional information acquisition unit 54; the traveling direction of the ball collector 1; and the traveling speed of the ball collector 1 or the rotational speed of the ball collection wheel 5.

The ball position identification unit 57 corrects the positional information on the ball collector 1 at a time point when balls were counted by touching the count sensor 27, using the information acquired by the to-be-corrected information acquisition unit 56, thereby acquiring the actual position where the balls were picked up (i.e., the actual positional information on the balls).

Specifically, the actual position where each ball was picked up is determined using the movement distance La of the ball collector 1 from the time each ball was picked up from the ground by the ball collection wheel 5 till the ball was counted by touching the count sensor 27, or the length of time Ja taken for each ball to be counted by the count sensor 27 after having been picked up from the ground by the ball collection wheel 5.

For example, based on the positional information on the ball collector 1 at a time point when each ball was counted by touching the count sensor 27, the movement distance La of the ball collector 1 from the time each ball was picked up from the ground by the ball collection wheel 5 till the ball was counted by touching the count sensor 27 is reflected (returned) in the direction opposite to the traveling direction of the ball collector 1 at that time, whereby the actual position where each ball was picked up is determined.

Alternatively, for example, the positional information on the ball collector 1 at a time point earlier than the time point when each ball was counted by touching the count sensor 27 by the length of time Ja, which was taken for each ball to be counted by touching the count sensor 27 after having been picked up from the ground by the ball collection wheel 5, is obtained, and the obtained positional information is determined to be the actual position where each ball was picked up. Accordingly, it is possible to determine the correct position of each ball on the ground.

The positional information storage unit 58 stores the actual positional information on the balls corrected by the ball position identification unit 57, and sends the stored actual positional information on the balls to the management server 70. The sending timing may be any of the following: each time a ball is collected, at a time when the ball collector 1 has returned to the station 65, and at a time when the operation has finished. It should be noted that the actual positional information on the balls may be stored in an external storage device, such as a memory card that is insertable into and removable from the controller 50, for example, other than being sent to the management server 70 for the ball collector 1 and stored therein as described above.

The traveling control unit 60 performs steering control, speed control, and the like by sending control signals to drive circuits 62 of the right and left drive motors 15 and the like so that the ball collector 1 travels in accordance with a ball density distribution map described later, an operation schedule, or the like, which are sent from the management server 70. In addition, upon receiving from the ball counting unit 53 information indicating that a ball count (e.g., the number of balls counted) has reached a given number, the traveling control unit 60 causes the ball collector 1 to stop the ball collecting operation and directs the ball collector 1 to the nearest storage space 66 so as to unload the balls in the collection tank 8 into the nearest storage space 66, and then resume the ball collecting operation. It should be noted that when the traveling control unit 60 directs the ball collector 1 to the storage space 66, the battery 14 is charged at the charging equipment 67 provided beside the storage space 66, as appropriate.

Meanwhile, the management server 70, as illustrated in the functional block of Fig. 4, is functionally provided with a ball distribution state acquisition unit 71, a ball density distribution map creation unit 72, and an operation management unit 75, and is connected to an input device 77 (e.g., a mouse, a touch pen, a keyboard, or a touchpad) and a display device 78.

The ball distribution state acquisition unit 71, as exemplarily illustrated in a schematic view of Fig. 5, plots ∘, for example, on each of the actual positions (i.e., latitude and longitude) of the balls B in the work area W, using the actual positional information on the balls, which is sent from the positional information storage unit 58, thereby acquiring a distribution state of balls.

Based on the distribution state of balls, the ball density distribution map creation unit 72 creates a ball density distribution map M including three areas: a high-density area Ma (i.e., an area in which balls are densely present), a low-density area Mb (i.e., an area in which balls are not so densely present), and a non-dense area Mc (i.e., an area in which balls are hardly densely present). It is needless to mention that the division of the ball density distribution map M is not limited thereto.

The ball density distribution map M may be manually created by a user or automatically created by computer processing. In the present embodiment, a user can select the way of creation by operating the input device 77.

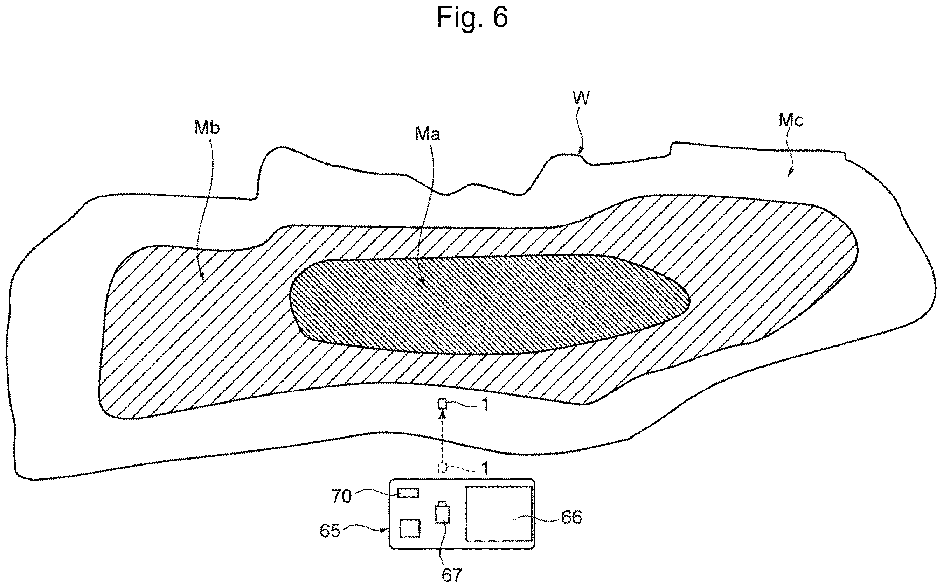

When the ball density distribution map M is manually created by a user, images (∘) of the balls B are displayed on the screen of the display device 78 as illustrated in Fig. 5, and the user, as illustrated in Fig. 6, inputs with the input device 77 a line surrounding a group of balls B that are relatively densely present as visually seen and sets a closed area surrounded by the line as the high-density area Ma. Then, the user inputs a line surrounding a group of balls B that are relatively not so densely present outside of the high-density area Ma and sets a portion of a closed area surrounded by the line, excluding the high-density area Ma (the closed area itself as input when there is no high-density area Ma in the closed area), as the low-density area Mb, and sets a portion of the work area W, in which balls B are hardly densely present, excluding the high-density area Ma and the low-density area Mb, as the non-dense Mc.

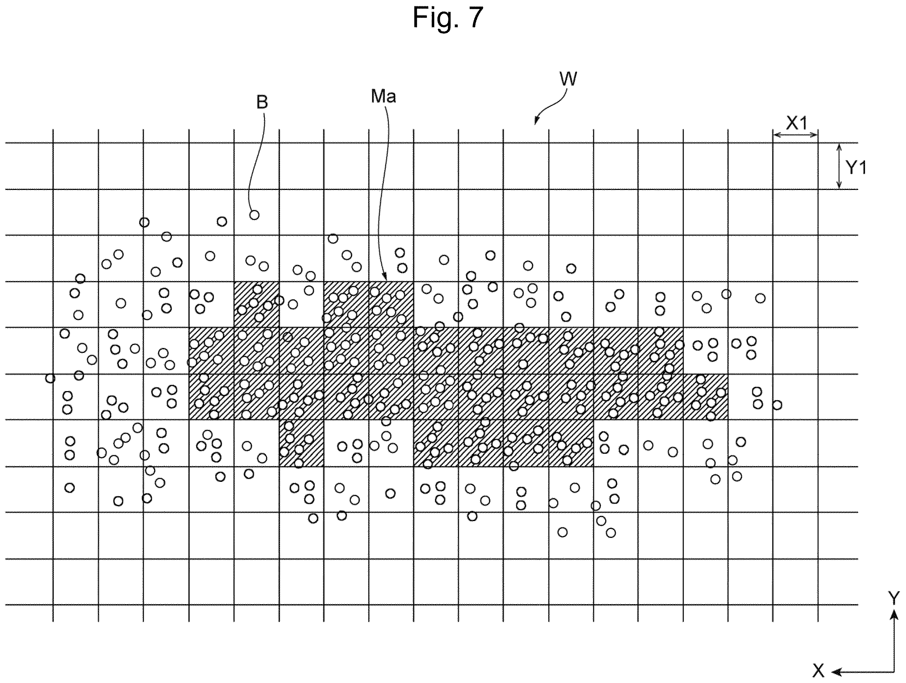

When the ball density distribution map M is automatically created by computer processing, as exemplarily illustrated in a conceptual view of Fig. 7 for setting the high-density area Ma, the work area W in which the images (∘) are plotted on the actual positions (i.e., latitude and longitude) of the balls B is divided into unit sections, each having (width X1 in the X direction) × (width Y1 in the Y direction), and the number of balls B in each unit section is counted. A closed area (i.e., hatched area) consisting of consecutive adjacent unit sections, in which the number of balls per unit section is equal to or larger than a set number (α), is set as the high-density area Ma. Likewise, a portion of a closed area consisting of consecutive adjacent unit sections, in which the number of balls per unit section is equal to or larger than a set number (β that is smaller than α), excluding the high-density area Ma (the closed area itself as calculated when there is no high-density area Ma in the closed area), is set as the low-density area Mb. A portion of the work area W, in which balls B are hardly densely present, excluding the high-density area Ma and the low-density area Mb, is set as the non-dense Mc.

Data on the ball density distribution map M created in this manner is sent to the operation management unit 75 as well as to the traveling control unit 60 of the controller 50.

It should be noted that examples of the method for setting the high-density area Ma or the like by computer processing may include identifying an aggregate of balls having a distance between two adjacent balls being equal to or smaller than a set distance and setting the aggregate of balls as the high-density area Ma or the like, identifying an area having a largest number of balls or ball density in an area (size) set beforehand, such as a high-density area Ma, and setting the area having a largest number of balls or ball density as the high-density area Ma or the like, for example, other than using the number of balls per predetermined unit section as described above.

In order to improve the efficiency in the ball collecting operation, the operation management unit 75 plans an operation schedule (or a program thereof) and a traveling method/traveling aspect of the ball collector 1 using the created ball density distribution map M such that an area having a high density of balls is given higher priority than an area having a low density of balls, more specifically, such that the area having a high density of balls has a higher travel ratio (e.g., travel time or travel distance) of the ball collector 1 than that of the area having a low density of balls, and then sends the plan for each day, for example, to the controller 50 before starting a collecting operation on the day.

The controller 50 (or the traveling control unit 60 thereof) controls the ball collector 1 to be directed to the target area (Ma, Mb, Mc) and perform pattern traveling (Fig. 10) or random traveling (Fig. 11) from a start point S to an end point E as appropriate along a traveling path R in accordance with the operation schedule or the like that is sent from the management server 70.

Accordingly, while traveling, the ball collector 1 picks up the balls on the ground with the ball collection wheel 5 and collects them into the collection tank 8.

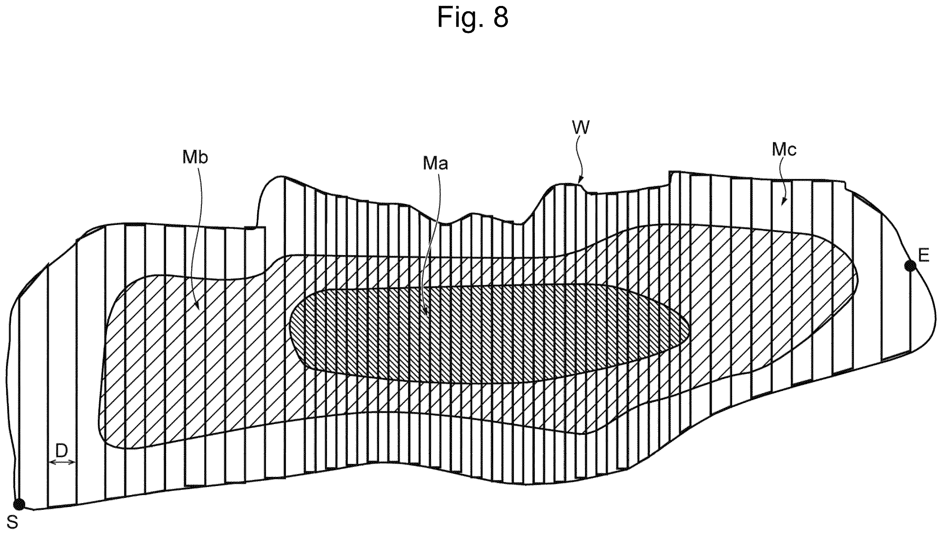

Herein, examples of the method for setting a higher travel ratio (e.g., travel time or travel distance) of the ball collector 1 in an area having a high density of balls than in an area having a low density of balls, may include, in the collecting operation during pattern traveling, as illustrated in Fig. 8, for example, minimizing a return width D when the ball collector 1 passes through the high-density area Ma (e.g., corresponding to a width slightly smaller than a lateral width of the ball collection wheel 5), slightly expanding the return width D when the ball collector 1 passes through the low-density area Mb (e.g., corresponding to a width larger than the lateral width of the ball collection wheel 5), and further expanding the return width D when the ball collector 1 passes through the non-dense area Mc.

With this configuration, the travel ratio (e.g., travel time or travel distance) of the ball collector 1 is low in an area in which balls are not so densely present or an area in which balls are hardly densely present.

In addition, examples of the method for setting a higher travel ratio (e.g., travel time or travel distance) of the ball collector 1 in an area having a high density of balls than in an area having a low density of balls, may include adjusting an operation schedule such that the area having a high density of balls has a more number of times of operation (provided that the number of times of operation in a target area counts as 1 when the collecting operation while traveling across the entire target area has finished) than that of the area having a low density of balls, other than changing the traveling method/traveling aspect by, for example, adjusting the return width D in pattern traveling as described above.

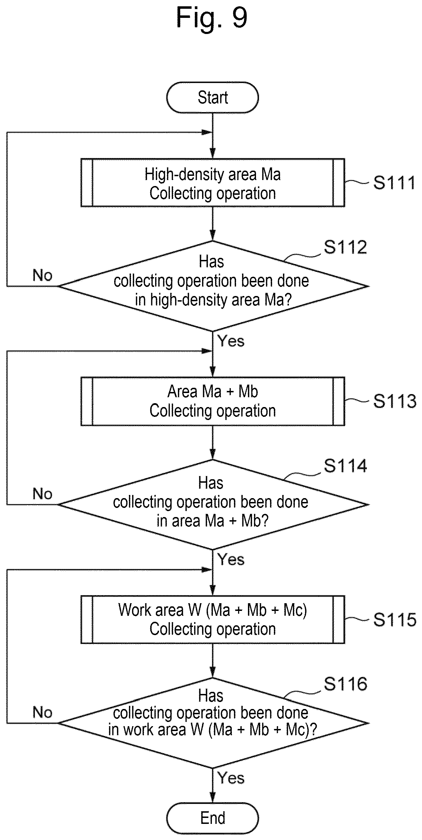

A program of this method will be described with reference to the flowchart of Fig. 9. This program is executed repeatedly in predetermined cycles.

Herein, first in steps S111 and S112, while traveling across everywhere only the high-density area Ma, the ball collector 1 performs the collecting operation once. The traveling method may be either pattern traveling or random traveling (the same applies hereinafter).

Next in steps S113 and S114, while traveling across the inside of the low-density area Mb, that is, everywhere the high-density area Ma + the low-density area Mb, the ball collector 1 performs the collecting operation once. This means that the ball collector 1 has finished the collecting operation in the high-density area Ma twice, and the collecting operation in the low-density area Mb once.

Next in steps S115 and S116, while traveling across the inside of the work area W (i.e., the inside of the non-dense area Mc), that is, everywhere the high-density area Ma + the low-density area Mb + the non-dense area Mc, the ball collector 1 performs the collecting operation once. This means that the ball collector 1 has finished the collecting operation in the high-density area Ma three times, the collecting operation in the low-density area Mb twice, and the collecting operation in the non-dense area Mc once.

It should be noted that the number of times of collecting operation or the travel time may vary among steps S111 and S112, steps S113 and S114, and steps S115 and S116 or the return width D in pattern traveling may be adjusted in the respective steps such that the area having a high density of balls has a higher travel ratio (e.g., travel time or travel distance) of the ball collector 1 than that of the area having a low density of balls.

As is clear from the aforementioned description, the scattered object collection system of the present embodiment identifies an actual position where each ball was picked up in the work area W using a signal received by the signal receiving unit 44 and a detection signal obtained by the count sensor 27, acquires a distribution state of balls in the work area W using the identified actual positional information on each ball, creates a ball density distribution map M including three areas having different ball densities: the high-density area Ma, the low-density area Mb, and the non-dense area Mc based on the acquired distribution state of balls, and allows the ball collector 1 to travel to perform a collecting operation in a place having a high density of balls with higher priority than a place having a low density of balls, more specifically, such that the place having a high density of balls has a higher travel ratio (e.g., travel time or travel distance) of the ball collector 1 than that of the place having a low density of balls, using the created ball density distribution map M. This reduces unnecessary traveling of the ball collector 1 and improves the efficiency in the ball collecting operation.

With an increased efficiency in the ball collecting operation, it is possible to achieve reduction in operation costs of a facility, such as reduction of the number of balls in stock, for example, and reduce the number of times of charging due to a low battery consumption (power consumption) relative to the number of collected balls, whereby the energy cost can be low.

It should be noted that the controller 50 of the ball collector 1 may perform the acquiring of a distribution state of balls, the creating of a ball density distribution map and the like, or an operator may perform them based on the actual positional information on the balls and then input information to the controller 50 of the ball collector 1 and the management server 70.

The aforementioned embodiment illustrates an example in which the ball collector 1 includes the count sensor 27 for counting the number of balls in the collection tank 8 as a sensor for detecting that each picked-up ball has been collected (i.e., detecting the position of each collected ball), at a position detected by a satellite positioning system, such as a GPS, for example, and the count sensor 27 sequentially detects that each ball has been collected and identifies the position of the ball. Alternatively, the ball collector 1 may include a weight sensor for measuring the weight of each ball in the collection tank 8 and another sensor so that the weight sensor detects that each ball has been collected and the other sensor identifies the position of the ball. As a further alternative, the ball collector 1 may include a sensor for counting the number of balls in the collection tank 8 and another sensor so that the former sensor detects that each ball has been collected and the latter sensor identifies the position of the ball. For such sensors, a physical detection method using a button, a detection method using a laser, or a detection method using a camera image is considered, for example. In addition, it is desirable that any balls be detectable even if they are not expensive ones with built-in IC chips. In that case, the aforementioned sensor is preferably used to detect that each ball has been collected. In particular, the ball collector 1 is preferably an unmanned autonomous ball collector.

The place (i.e., area) where the ball collector 1 is used, the types of balls to be collected, and the like are not limited to the aforementioned examples.

Although the aforementioned embodiment illustrates examples in which the objects to be collected (i.e., scattered objects) are golf balls that have been struck and scattered on the ground in the golf driving range, the present embodiment is not limited thereto and is similarly applicable when the objects to be collected (i.e., scattered objects) are balls scattered on the ground in a sports facility, such as tennis balls or baseballs, nuts, or containers, for example.

Although the embodiment of the present invention has been described in detail above, the specific configuration is not limited thereto, and any design changes and the like that are within the scope of the appended claims are encompassed by the present invention. In addition, the techniques of the aforementioned embodiment can be combined as appropriate as long as there is no contradiction or problem in the objects, configurations, or the like of the embodiment.

### List of Reference Signs

- 1: Ball collector (autonomous collector)
- 5: Ball collection wheel (collection member)
- 6: Traveling body
- 7: Ball releasing member
- 8: Collection tank
- 19: Disc
- 27: Count sensor
- 43: Disc number-of-revolutions sensor
- 44: Signal receiving unit
- 50: Controller
- 51: Timer unit
- 52: Rotational speed calculation unit
- 53: Ball counting unit
- 54: Positional information acquisition unit
- 56: To-be-corrected information acquisition unit
- 57: Ball position identification unit
- 58: Positional information storage unit
- 60: Traveling control unit
- 65: Station
- 66: Storage space
- 67: Charging equipment
- 70: Management server
- 71: Ball distribution state acquisition unit
- 72: Ball density distribution map creation unit
- 75: Operation management unit
- 77: Input device
- 78: Display device
- 80: Collector management unit
- W: Work area
- M: Ball density distribution map (scattered object density distribution map)
- Ma: High-density area
- Mb: Low-density area
- Mc: Non-dense area

## Claims

1. A scattered object collection system comprising:
an autonomous collector (1) configured to perform a collecting operation by picking up scattered objects scattered in a work area (W) while traveling in the work area (W);
a collector management unit (80) configured to manage the autonomous collector (1) and to acquire positional information on the autonomous collector (1); and
a sensor (27) for sequentially detecting that each scattered object has been picked up and collected and for acquiring collection information,
**characterized in that**
the collector management unit (80) comprises an information acquisition unit (56) configured to identify an actual position where each scattered object was picked up in the work area (W) using the acquired positional information and the acquired collection information, and an object position identification unit (57) configured to correct the positional information on the collector (1) at a time point when the objects are detected by the sensor (27), using information acquired by the information acquisition unit (56), thereby acquiring the actual position where each object were picked up, and wherein the collector management unit is further configured to manage the autonomous collector (1) to perform a collecting operation in an area having a high density of scattered objects with a higher travel ratio than in an area having a low density of scattered objects using the identified actual positional information on each scattered object.

2. The scattered object collection system according to claim 1, wherein the collector management unit (80) is constituted of a controller (50) provided in the autonomous collector (1) and/or a management server for the autonomous collector (1).

3. The scattered object collection system according to any one of claims 1 and 2, wherein the collector management unit (80) is configured to acquire a distribution state of scattered objects in the work area (W) using the actual positional information on each scattered object, and to create a scattered object density distribution map (M) including a plurality of density areas (Ma, Mb, Mc) having different densities of scattered objects based on the acquired distribution state.

4. The scattered object collection system according to claim 3, wherein the collector management unit (80) is configured to create the scattered object density distribution map (M) based on at least one of positional information on each scattered object, respective sizes of the plurality of density areas (Ma, Mb, Mc) set beforehand, or a size of a unit section set beforehand to measure a density of the scattered objects.

5. The scattered object collection system according to claim 4, wherein the collector management unit (80) is configured to manage the autonomous collector (1) to prefer performing a collecting operation in a density area (Ma, Mb, Mc) representing a relatively high density of scattered objects among the plurality of density areas (Ma, Mb, Mc) based on the scattered object density distribution map (M).

6. The scattered object collection system according to any one of claims 1 to 5, wherein the scattered objects are balls (B) scattered on a ground in a sports facility.

7. The scattered object collection system according to any one of claims 1 to 5, wherein the autonomous collector (1) is configured to be used for collecting balls (B) that have been struck and scattered on a ground in a golf driving range.

8. The scattered object collection system according to any one of the preceding claims, wherein performing the collecting operation with the higher travel ratio comprises operating the autonomous collector (1) first in the area with the higher density of scattered objects and next both in the area with the higher density of scattered objects and in the area with the lower density of scattered objects, or operating the autonomous collector (1) with a smaller return width (D) in the area with the higher density of scattered objects than in the area with the lower density of scattered objects.

## Patentansprüche

1. System zum Sammeln verstreuter Objekte, aufweisend:
einen autonomen Sammler (1), der dazu ausgebildet ist, einen Sammelvorgang durchzuführen, indem er verstreute Objekte aufnimmt, die in einem Arbeitsbereich (W) verstreut sind, während er sich in dem Arbeitsbereich (W) bewegt;
eine Sammlerverwaltungseinheit (80), die dazu ausgebildet ist, den autonomen Sammler (1) zu verwalten und Positionsinformationen über den autonomen Sammler (1) zu erfassen; und
einen Sensor (27), der nacheinander feststellt, dass jedes verstreute Objekt aufgenommen und gesammelt wurde, und der Sammelinformationen erfasst,
**dadurch gekennzeichnet, dass**
die Sammlerverwaltungseinheit (80) eine Informationserfassungseinheit (56) aufweist, die dazu ausgebildet ist, unter Verwendung der erfassten Positionsinformationen und der erfassten Sammelinformationen, eine tatsächliche Position zu identifizieren, an der jedes verstreute Objekt in dem Arbeitsbereich (W) aufgenommen wurde, und eine Objektpositionsidentifikationseinheit (57) aufweist, die dazu ausgebildet ist, die Positionsinformationen über den Sammler (1) zu einem Zeitpunkt zu korrigieren, an dem die Objekte von dem Sensor (27) erfasst werden, unter Verwendung von Informationen, die von der Informationserfassungseinheit (56) erfasst wurden, wodurch die tatsächliche Position erfasst wird, an der jedes Objekt aufgenommen wurde, und wobei die Sammlerverwaltungseinheit weiterhin dazu ausgebildet ist, den autonomen Sammler (1) so zu verwalten, dass er einen Sammelvorgang in einem Bereich mit einer hohen Dichte von verstreuten Objekten mit einem höheren Fahrverhältnis als in einem Bereich mit einer geringen Dichte von verstreuten Objekten unter Verwendung der erkannten tatsächlichen Positionsinformationen über jedes verstreute Objekt durchführt.

2. System zum Sammeln verstreuter Objekte nach Anspruch 1, wobei die Sammlerverwaltungseinheit (80) aus einem im autonomen Sammler (1) bereitgestellten Steuergerät (50) und/oder einem Verwaltungsserver für den autonomen Sammler (1) gebildet ist.

3. System zum Sammeln verstreuter Objekte nach einem der Ansprüche 1 und 2, wobei die Sammlerverwaltungseinheit (80) dazu ausgebildet ist, einen Verteilungszustand von verstreuten Objekten in dem Arbeitsbereich (W) unter Verwendung der tatsächlichen Positionsinformationen über jedes verstreute Objekt zu erfassen und eine Objektdichteverteilungskarte (M) zu erstellen, die mehrere Dichtebereiche (Ma, Mb, Mc) mit unterschiedlichen Dichten von verstreuten Objekten auf der Grundlage des erfassten Verteilungszustandes enthält.

4. System zum Sammeln verstreuter Objekte nach Anspruch 3, wobei die Sammlerverwaltungseinheit (80) dazu ausgebildet ist, die Objektdichteverteilungskarte (M) auf der Grundlage von mindestens einer der folgenden Informationen zu erstellen: Positionsinformationen über jedes verstreute Objekt, im Voraus festgelegte Größen der jeweiligen Dichtebereiche (Ma, Mb, Mc) oder eine Größe eines im Voraus festgelegten Einheitsabschnitts, um eine Dichte der verstreuten Objekte zu messen.

5. System zum Sammeln verstreuter Objekte nach Anspruch 4, wobei die Sammlerverwaltungseinheit (80) dazu ausgebildet ist, den autonomen Sammler (1) so zu verwalten, dass er vorzugsweise einen Sammelvorgang in einem Dichtebereich (Ma, Mb, Mc) durchführt, der eine relativ hohe Dichte von verstreuten Objekten unter den Dichtebereichen (Ma, Mb, Mc) darstellt, basierend auf der Objektdichteverteilungskarte (M).

6. System zum Sammeln verstreuter Objekte nach einem der Ansprüche 1 bis 5, wobei es sich bei den verstreuten Objekten um Bälle (B) handelt, die auf dem Boden einer Sportanlage verstreut sind.

7. System zum Sammeln verstreuter Objekte nach einem der Ansprüche 1 bis 5, wobei der autonome Sammler (1) dazu ausgebildet ist, zum Sammeln von Bällen (B) verwendet zu werden, die auf einem Boden in einer Golf Driving Range getroffen und verstreut wurden.

8. System zum Sammeln verstreuter Objekte nach einem der vorhergehenden Ansprüche, wobei die Durchführung des Sammelvorgangs mit dem höheren Fahrverhältnis umfasst, dass der autonome Sammler (1) zunächst in dem Bereich mit der höheren Dichte an verstreuten Objekten und anschließend sowohl in dem Bereich mit der höheren Dichte an verstreuten Objekten als auch in dem Bereich mit der geringeren Dichte an verstreuten Objekten betrieben wird, oder dass der autonome Sammler (1) in dem Bereich mit der höheren Dichte an verstreuten Objekten mit einer geringeren Rücklaufbreite (D) betrieben wird als in dem Bereich mit der geringeren Dichte an verstreuten Objekten.

## Revendications

1. Système de collecte d'objets éparpillés comprenant :
un collecteur autonome (1) configuré pour réaliser une opération de collecte par le ramassage d'objets éparpillés qui sont éparpillés dans une zone de travail (W) tout en se déplaçant dans la zone de travail (W) ;
une unité de gestion de collecteur (80) configurée pour gérer le collecteur autonome (1) et pour acquérir des informations de positionnement sur le collecteur autonome (1) ; et
un capteur (27) pour la détection, en séquence, que chaque objet éparpillé a été ramassé et collecté et pour l'acquisition d'informations de collecte,
**caractérisé en ce que**
l'unité de gestion de collecteur (80) comprend une unité d'acquisition d'informations (56) configurée pour identifier une position réelle où chaque objet éparpillé a été ramassé dans la zone de travail (W) à l'aide des informations de positionnement acquises et des informations de collecte acquises, et une unité d'identification de position d'objet (57) configurée pour corriger les informations de positionnement sur le collecteur (1) à un instant auquel les objets sont détectés par le capteur (27), à l'aide d'informations acquises par l'unité d'acquisition d'informations (56), ce qui permet d'acquérir la position réelle où chaque objet a été ramassé, et dans lequel l'unité de gestion de collecteur est en outre configurée pour gérer le collecteur autonome (1) afin qu'il réalise une opération de collecte dans une zone ayant une densité élevée d'objets éparpillés avec un rapport de déplacement plus élevé que dans une zone ayant une densité faible d'objets éparpillés à l'aide des informations de positionnement réel identifiées sur chaque objet éparpillé.

2. Système de collecte d'objets éparpillés selon la revendication 1, dans lequel l'unité de gestion de collecteur (80) est constituée d'un dispositif de commande (50) ménagé dans le collecteur autonome (1) et/ou d'un serveur de gestion pour le collecteur autonome (1).

3. Système de collecte d'objets éparpillés selon l'une quelconque des revendications 1 et 2, dans lequel l'unité de gestion de collecteur (80) est configurée pour acquérir un état de distribution d'objets éparpillés dans la zone de travail (W) à l'aide des informations de positionnement réel sur chaque objet éparpillé, et pour créer une carte de distribution de densité d'objets éparpillés (M) incluant une pluralité de zones de densité (Ma, Mb, Mc) ayant différentes densités d'objets éparpillés sur la base de l'état de distribution acquis.

4. Système de collecte d'objets éparpillés selon la revendication 3, dans lequel l'unité de gestion de collecteur (80) est configurée pour créer la carte de distribution de densité d'objets éparpillés (M) sur la base d'au moins l'une parmi des informations de positionnement sur chaque objet éparpillé, des tailles respectives de la pluralité de zones de densité (Ma, Mb, Mc) définies au préalable, ou une taille d'une section unitaire définie au préalable pour mesurer une densité des objets éparpillés.

5. Système de collecte d'objets éparpillés selon la revendication 4, dans lequel l'unité de gestion de collecteur (80) est configurée pour gérer le collecteur autonome (1) afin qu'il préfère réaliser une opération de collecte dans une zone de densité (Ma, Mb, Mc) représentant une densité relativement élevée d'objets éparpillés parmi la pluralité de zones de densité (Ma, Mb, Mc) sur la base de la carte de distribution de densité d'objets éparpillés (M).

6. Système de collecte d'objets éparpillés selon l'une quelconque des revendications 1 à 5, dans lequel les objets éparpillés sont des balles (B) éparpillées sur un sol dans un centre sportif.

7. Système de collecte d'objets éparpillés selon l'une quelconque des revendications 1 à 5, dans lequel le collecteur autonome (1) est configuré pour être utilisé pour la collecte de balles (B) qui ont été frappées et éparpillées sur un sol dans un practice de golf.

8. Système de collecte d'objets éparpillés selon l'une quelconque des revendications précédentes dans lequel la réalisation de l'opération de collecte avec le rapport de déplacement plus élevé comprend la mise en fonctionnement du collecteur autonome (1) d'abord dans la zone ayant la densité plus élevée d'objets éparpillés et ensuite à la fois dans la zone ayant la densité plus élevée d'objets éparpillés et dans la zone ayant la densité plus faible d'objets éparpillés, ou la mise en fonctionnement du collecteur autonome (1) avec une largeur de retour (D) plus petite dans la zone ayant la densité plus élevée d'objets éparpillés que dans la zone ayant la densité plus faible d'objets éparpillés.
